# EUROPEAN PATENT APPLICATION

(11) **EP 3 021 219 A1**
(43) Date of publication of application: **18.05.2016**
(21) Application number: 14306821.1
(22) Date of filing: 17.11.2014
(51) Int. Cl.: G06F 9/45, G06F 9/455, G06F 17/30, G06F 11/14

(54) **Precompiled dynamic language code resource delivery**

(71) Applicant: ALCATEL LUCENT, 92100 Boulogne-Billancourt (FR)
(72) Inventor: Van Broeck, Sigurd, 2018 Antwerp (BE); Verzijp, Nico Victor, 2018 Antwerp (BE)
(74) Representative: D'Halleweyn, Nele Veerle Trees Gertrudis

(57) **Abstract**

A method for delivering a code resource of a dynamic programming language to a user agent, comprising the following steps at a delivery appliance remote from said user agent: compiling said code resource to a compiled resource using optimization; including at least one type check in said compiled resource; sending to said user agent said compiled resource; and sending to said user agent at least one fallback resource for said compiled resource; wherein said at least one fallback resource is adapted for replacing at least partially said compiled resource when a type mismatch due to said optimization is detected during execution of said compiled resource.

## Description

### Field of the Invention

The field of the invention relates to web applications. Particular embodiments relate to a method and delivery appliance for delivering a code resource, a method and user agent for obtaining a code resource, a method and a system for providing a code resource to a user agent, and a computer program product for respectively delivering to, obtaining at and providing a code resource to a user agent.

### Background

Web applications running code written in a dynamic programming language such as JavaScript are generally known to run slower than native applications. Currently, a performance race between the different user agent vendors is ongoing, hoping to increase the performance up to achieving speeds that are not significantly slower than native applications, or in other cases equally fast as native applications.

However, existing approaches are dependent on the target machine and are vendor-specific.

### Summary

It is an object of embodiments of the present invention to improve the performance of Web applications. Additional objects of embodiments of the present invention are that the solution is general in that it can be adopted by all or nearly all user agent vendors and delivery appliances; that the solution is resource-friendly for end user devices; and/or that the solution is independent from target machines. A further additional object of embodiments of the present invention is to improve the trust that end users bestow on the Web application.

According to an aspect of the invention, there is provided a method for delivering a code resource of a dynamic programming language to a user agent, comprising the following steps at a delivery appliance remote from said user agent: compiling said code resource to a compiled resource using optimization; including at least one type check in said compiled resource; sending to said user agent said compiled resource; and sending to said user agent at least one fallback resource for said compiled resource. Said at least one fallback resource is adapted for replacing at least partially said compiled resource when a type mismatch due to said optimization is detected during execution of said compiled resource.

In this manner, the method improves the performance of Web applications by providing a compiled resource directly to the user agent that can be executed by the user agent more quickly *(i.e.,* with less runtime duration) than the original code resource, without requiring time-consuming staged compilation at the user agent. The method is general since it requires no proprietary or closed components, and since it can be applied to any dynamic programming language and any suitable compiler. The method is resource-friendly for end user devices since the power-hungry compilation takes place at the delivery appliance. Moreover, the method improves the performance of the Web application since compilation at the delivery appliance may be done in less time than at the user agent, since the delivery appliance can dispose of more powerful processing equipment, such that the initial delay before commencing program execution by the user agent may be decreased. Moreover, since the speed and thus the responsiveness of Web applications is increased, the method improves end user's trust bestowed on the respective Web applications. By sending one or more fallback resources that are adapted (each one separately, or together as a combination) for said replacing, the method allows to cope with said type mismatch.

The skilled person understands that in general compiled resources may be executed via interpretation, via first compiling them to (object code and) machine code, or via hybrid schemes.

In an embodiment, said at least one fallback resource comprises at least one of: said code resource; a bytecode resource produced from said code resource; and a dynamically typed resource compiled from said code resource using optimization. Additionally or alternatively, said compiled resource *(i.e.,* said original compiled resource) is a statically typed intermediate representation, preferably LLVM Intermediate Representation.

In this manner, by sending said code resource as a fallback resource, debugging at said user agent is facilitated; by sending said bytecode resource, a compromise between compilation time and execution time can be sought; and by sending said dynamically typed resource compiled from said code resource using optimization, said statically typed compiled resource can be replaced (at least partially) by a resource that is still reasonably efficient to execute, but that is not hampered by type mismatches due to optimization involving static type assumptions. Moreover, the method is independent from target machines, since the compiled resource can be chosen and/or configured, using a target-independent format or a target-independent subset of a format, such that it can be executed on different instruction set architectures, through interpretation or through back-end compilation and native machine code generation.

In an embodiment, said method comprises sending from said delivery appliance to said user agent a code map representing a mapping relationship between said compiled resource and said at least one fallback resource.

In this manner, the user agent can more easily replace select portions of the compiled resource with select portions of the at least one fallback resource, since the mapping between those is known.

In an embodiment, at least one of said resources is produced taking into account user agent properties of a respective user agent. Said method comprises the following steps at said delivery appliance: storing said compiled resource and said at least one fallback resource as cached resources; and upon receiving a request from a new user agent for delivering said code resource, determining which of said cached resources are compatible with said new user agent. Then, for each cached resource that is determined to be compatible, the method comprises sending said respective compatible cached resource to said new user agent; and for each cached resource that is determined to be incompatible, obtaining a compatible version of said respective incompatible resource and sending said compatible version to said new user agent. In a further developed embodiment, said cached resources optionally also include said code map.

In this manner, overall time and power requirements can be reduced, since the delivery appliance can obviate the need to repeat compilation steps for code resources it has already compiled previously and cached. Moreover, this further increases performance of the Web application(s) and further reduces the initial delay for execution by the user agent, since the delivery appliance can load cached resources, for a given user agent, that are either target-independent *(i.e.,* are independent of the user agent engine type) or that are target-dependent but compatible with or specifically optimized for the user agent engine type of that given user agent.

In an embodiment, said delivery appliance is situated at a network node between said user agent and said origin server. Said method comprises obtaining said code resource from an origin server storing said code resource.

In this manner, the method is applicable to content distribution networks in which a delivery appliance (known then as a 'cache server') connects an origin server to the client premises.

In another embodiment, the method comprises pre-storing said code resource on said delivery appliance.

In this manner, the functionality of the delivery appliance and typical functionality of an origin server may be combined into one apparatus.

In an embodiment, said compiled resource is sent to said user agent in any of the following manners: included in said at least one fallback resource; or as a new Internet media type; or via a full-duplex communication channel between said user agent and said delivery appliance.

In this manner, the compiled resource can be sent to the user agent efficiently and effectively.

In another embodiment, said method comprises at said delivery appliance: receiving a code resource request; and sending, in response to said code resource request, to said user agent a push promise indicating a promise to push said compiled resource and said at least one fallback resource to said user agent at a later time. In this manner, no additional request between the delivery appliance and the user agent other than the original code resource request is necessary. The user agent can then simply accept or decline the push promise if it does or does not support the delivery.

In another embodiment, said method comprises at said delivery appliance: storing at least one of said compiled resource and said at least one fallback resource at an accessible location; encoding said accessible location as a resource reference, such as a hyperlink, configured for providing at least one of said compiled resource and said at least one fallback resource when said resource reference is accessed by a user agent; and sending said resource reference to said user agent. In this manner, the user agent can then simply obtain the delivery of the respective resources by accessing the resource reference.

According to another aspect of the invention, there is provided a method for obtaining a code resource of a dynamic programming language at a user agent, comprising the following steps at said user agent: receiving from a delivery appliance remote from said user agent a compiled resource compiled from said code resource using optimization; and receiving from said delivery appliance at least one fallback resource for said compiled resource. Said at least one fallback resource is adapted for replacing at least partially said compiled resource when a type mismatch due to said optimization is detected during execution of said compiled resource.

The skilled person will understand that the hereinabove described considerations and advantages also apply for embodiments of the method for obtaining a code resource, *mutatis mutandis.* Also, before performing the steps of receiving said compiled resource and receiving said at least one fallback resource, said user agent may first request delivery of said original code resource.

In an embodiment, said method comprises the following steps at said user agent: executing said compiled resource; and detecting whether a type mismatch due to said optimization occurs when executing said compiled resource. When a type mismatch is detected the method comprises replacing at least partially said compiled resource with said at least one fallback resource.

In this manner, the method improves performance of the Web application, since the user agent can execute a more efficient version of the program while still being able to deal with type mismatches that are due to the dynamic nature of the programming language used for the program, thanks to the fallback resource that can replace the mismatching compiled resource. In a particular application, a part of the fallback resource or fallback resources can replace the mismatching function being executed of the compiled resource.

In an embodiment, said at least one fallback resource comprises at least one of: said code resource; a bytecode resource produced from said code resource; and a dynamically typed resource compiled from said code resource using optimization. Additionally or alternatively, said compiled resource is a statically typed intermediate representation, preferably LLVM Intermediate Representation.

In this manner, by receiving said code resource as a fallback resource, debugging at said user agent is facilitated; by receiving said bytecode resource, a compromise between compilation time and execution time can be sought; and by receiving said dynamically typed resource compiled from said code resource using optimization, said statically typed compiled resource can be replaced (at least partially) by a resource that is still reasonably efficient to execute, but that is not hampered by type mismatches due to optimization involving static type assumptions.

In an embodiment, said method comprises the following steps at said user agent: receiving from said delivery appliance a code map representing a mapping relationship between said compiled resource and said at least one fallback resource; and taking into account said code map for said replacing.

In this manner, the user agent can more easily replace select portions of the compiled resource with select portions of the at least one fallback resource, since the mapping between those is known.

In an embodiment, said replacing comprises: replacing by performing an on-stack-replacement exit from said compiled resource being executed to one of said at least one fallback resource; or replacing by compiling from said at least one fallback resource a replacement compiled resource adapted for replacing at least partially said compiled resource.

In this manner, it is possible to quickly replace the original compiled resource with a fallback resource. Alternatively, it is possible to generate at the user agent a replacement compiled resource, that is better suited to the execution conditions at the user agent, to replace the original compiled resource.

In an embodiment, said method comprises at said user agent: providing to said delivery appliance user agent properties of said user agent; and receiving resources from said delivery appliance that are compatible with said user agent.

In this manner, the method allows to increases performance of the Web application(s) since the resources can be specifically optimized for the user agent engine type of said user agent.

In a preferred embodiment, said providing is performed in an original request for obtaining said code resource *(i.e.,* the related HTML or JavaScript request). In that manner, no additional request from the delivery appliance to the user agent is required.

In another embodiment, said method comprises at said user agent: receiving from said delivery appliance a push promise indicating a promise to push said compiled resource and said at least one fallback resource to said user agent at a later time. In this manner, no additional request between the delivery appliance and the user agent other than the original code resource request is necessary. The user agent can then simply accept or decline the push promise if it does or does not support the delivery.

In another embodiment, said method comprises at said user agent: receiving from said delivery appliance a resource reference, such as a hyperlink, configured for providing at least one of said compiled resource and said at least one fallback resource when said resource reference is accessed by a user agent. In this manner, the user agent can then simply obtain the delivery of the respective resources by accessing the resource reference.

According to another aspect of the invention, there is provided a method for providing a code resource of a dynamic programming language to a user agent remote from a delivery appliance, comprising all of the steps of any one of the methods for delivering a code resource described hereinabove performed at a delivery appliance and all of the steps of any one of the methods for obtaining a code resource described hereinabove performed at a user agent.

The skilled person will understand that the hereinabove described considerations and advantages also apply for embodiments of the method comprising all of the steps of the two respective methods, *mutatis mutandis.*

According to another aspect of the invention, there is provided a delivery appliance for delivering a code resource of a dynamic programming language to a user agent remote from said delivery appliance. Said delivery appliance comprises a compiler and a transmitter. Said compiler is configured for: compiling said code resource to a compiled resource using optimization; and including at least one type check in said compiled resource.
Said transmitter is configured for: sending to said user agent said compiled resource; and sending to said user agent at least one fallback resource for said compiled resource. Said at least one fallback resource is adapted for replacing at least partially said compiled resource when a type mismatch due to said optimization is detected during execution of said compiled resource.

The skilled person will understand that the hereinabove described considerations and advantages also apply for embodiments of the delivery appliance, *mutatis mutandis.*

In an embodiment, said compiler is a front-end compiler.

In an embodiment, at least a part of said compiler is supplied to said delivery appliance by an operator of said delivery appliance.
In another embodiment, at least a part of said compiler is supplied to said delivery appliance by a user agent manufacturer. In this manner, the user agent manufacturer can better adapt the compiler to the needs of its respective user agent.

In an embodiment, said at least one fallback resource comprises at least one of: said code resource; a bytecode resource produced from said code resource; and a dynamically typed resource compiled from said code resource using optimization. Additionally or alternatively, said compiled resource (*i.e.,* said original compiled resource) is a statically typed intermediate representation, preferably LLVM Intermediate Representation.

In an embodiment, said transmitter is configured for sending from said delivery appliance to said user agent a code map representing a mapping relationship between said compiled resource and said at least one fallback resource.

In an embodiment, at least one of said resources is produced by a resource producer that is configured for taking into account user agent properties of a respective user agent. Said delivery appliance comprises a storage configured for storing said compiled resource and said at least one fallback resource as cached resources. Said delivery appliance comprises a compatibility manager configured for, upon receiving a request from a new user agent for delivering said code resource, determining which of said cached resources are compatible with said new user agent. Then, for each cached resource that is determined to be compatible, the compatibility manager is configured for sending said respective compatible cached resource to said new user agent; and for each cached resource that is determined to be incompatible, obtaining a compatible version of said respective incompatible resource and sending said compatible version to said new user agent. In a further developed embodiment, said cached resources optionally also include said code map.

In an embodiment, said delivery appliance is situated at a network node between said user agent and said origin server. Said delivery appliance is configured for obtaining said code resource from an origin server storing said code resource.
In another embodiment, the delivery appliance comprises a storage configured for pre-storing said code resource on said delivery appliance.

In an embodiment, said transmitter is configured for sending said compiled resource to said user agent in any of the following manners: included in said at least one fallback resource; or as a new Internet media type; or via a full-duplex communication channel between said user agent and said delivery appliance.

In another embodiment, said delivery appliance comprises a delivery scheduler configured for receiving a code resource request; and sending, in response to said code resource request, to said user agent a push promise indicating a promise to push said compiled resource and said at least one fallback resource to said user agent at a later time. In this manner, no additional request between the delivery appliance and the user agent other than the original code resource request is necessary. The user agent can then simply accept or decline the push promise if it does or does not support the delivery.

In another embodiment, said delivery appliance comprises a delivery scheduler configured for storing in a cache memory storage at least one of said compiled resource and said at least one fallback resource at an accessible location; encoding said accessible location as a resource reference, such as a hyperlink, configured for providing at least one of said compiled resource and said at least one fallback resource when said resource reference is accessed by a user agent; and sending said resource reference to said user agent. In this manner, the user agent can then simply obtain the delivery of the respective resources by accessing the resource reference.

According to another aspect of the invention, there is provided a user agent for obtaining a code resource of a dynamic programming language, comprising a receiver. Said receiver is configured for: receiving from a delivery appliance remote from said user agent a compiled resource compiled from said code resource using optimization; and receiving from said delivery appliance at least one fallback resource for said compiled resource. Said at least one fallback resource is adapted for replacing at least partially said compiled resource when a type mismatch due to said optimization is detected.

The skilled person will understand that the hereinabove described considerations and advantages also apply for embodiments of the user agent, *mutatis mutandis.*

In an embodiment, said user agent comprises an execution environment configured for executing said compiled resource; and for detecting whether a type mismatch due to said optimization occurs when executing said compiled resource. The user agent also comprises a code replacer configured for, when a type mismatch is detected by said execution environment, replacing at least partially said compiled resource with said at least one fallback resource.

In an embodiment, said at least one fallback resource comprises at least one of: said code resource; a bytecode resource produced from said code resource; and a dynamically typed resource compiled from said code resource using optimization. Additionally or alternatively, said compiled resource is a statically typed intermediate representation, preferably LLVM Intermediate Representation.

In an embodiment, said receiver is configured for receiving from said delivery appliance a code map representing a mapping relationship between said compiled resource and said at least one fallback resource; and a or said code replacer is configured for taking into account said code map for said replacing.

In an embodiment, said code replacer is configured for replacing by performing an on-stack-replacement exit from said compiled resource being executed to one of said at least one fallback resource; or replacing by compiling from said at least one fallback resource a replacement compiled resource adapted for replacing at least partially said compiled resource.

In an embodiment, said user agent is configured for providing to said delivery appliance user agent properties of said user agent; and said receiver is configured for receiving resources from said delivery appliance that are compatible with said user agent.

In a preferred embodiment, said user agent is configured for providing user agent properties to said delivery appliance in an original request for obtaining said code resource (*i.e.,* the related HTML or JavaScript request). In that manner, no additional request from the delivery appliance to the user agent is required.

In another embodiment, said receiver is configured for receiving from said delivery appliance a push promise indicating a promise to push said compiled resource and said at least one fallback resource to said user agent at a later time. In this manner, no additional request between the delivery appliance and the user agent other than the original code resource request is necessary. The user agent can then simply accept or decline the push promise if it does or does not support the delivery.

In another embodiment, said receiver is configured for receiving from said delivery appliance a resource reference, such as a hyperlink, configured for providing at least one of said compiled resource and said at least one fallback resource when said resource reference is accessed by a user agent. In this manner, the user agent can then simply obtain the delivery of the respective resources by accessing the resource reference.

According to another aspect of the invention, there is provided a system for providing a code resource of a dynamic programming language to a user agent, said system comprising: at least one user agent according to any one of the user agent embodiments described hereinabove; and a delivery appliance according to any one of the delivery appliance embodiment described hereinabove.

The skilled person will understand that the hereinabove described considerations and advantages also apply for embodiments of the system, *mutatis mutandis.*

In an embodiment, the system comprises an origin server storing a code resource and configured for sending said code resource to said delivery appliance.

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, *mutatis mutandis.*

### Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:
Figure 1 illustrates a typical content delivery chain for an embodiment of a system according to the invention;
Figure 2 illustrates the prior art PNaCl workflow;
Figure 3 illustrates an embodiment of a method according to the invention;
Figures 4A and 4B illustrate an embodiment of a system and a method according to the invention;
Figure 5 illustrates an embodiment of a delivery appliance according to the invention; and
Figure 6 illustrates an embodiment of a user agent according to the invention.

### Description of Embodiments

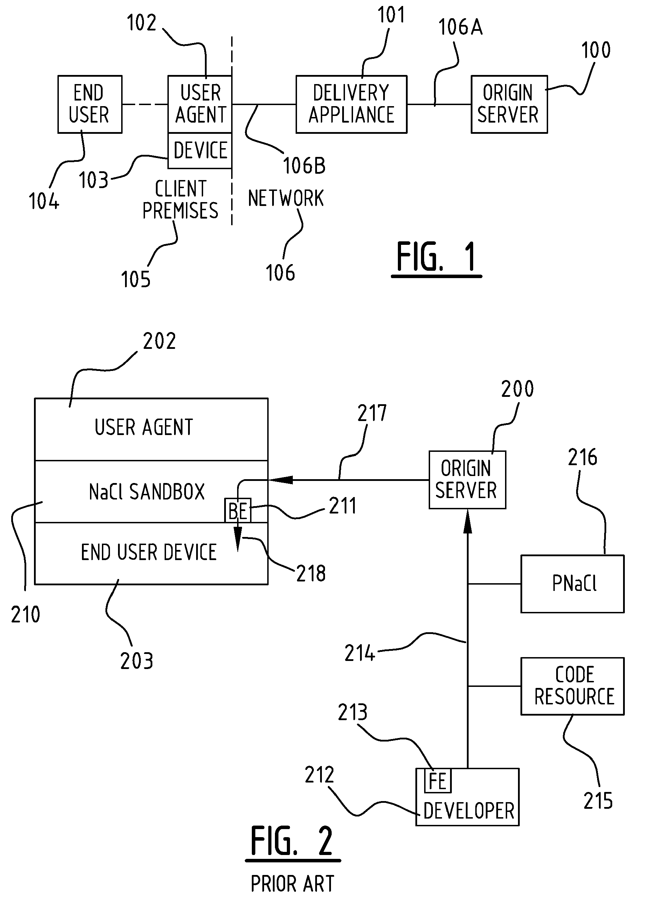

Web content obtained from origin servers 100 for consumption by end users 104 is delivered via one or more intermediaries to user agents 102 (*i.e.,* browsers). The intermediaries that have an active role in the delivery chain are further referred to as delivery appliances 101 and may be part of *e.g.* a Content Delivery Network (CDN). A typical content delivery chain is depicted in figure 1. The delivery appliance 101 and the origin server 100 are situated in a network 106 and connected via connections 106A and 106B to the client premises 105, where the end user device 103 on which the user agent 102 runs is situated.

Web applications comprise interactive Web contents and represent the large majority of Web pages available today on the Internet. Web applications are a logical combination of multiple individual Web resources like HTML (HyperText Mark-up Language), CSS (Cascading Style Sheets), JavaScript (or ECMAScript), SVG (Scalable Vector Graphics), images, audio, videos and other files. The JavaScript resources are typically interpreted or compiled by the user agent's JavaScript engine, and visual parts are rendered by the user agent's graphical engine for consumption by the end user. Web applications can range from simple Web pages to powerful applications, including web libraries, widgets, web components, and web bundles, that are closing the gap with native applications both in terms of functionality as well as performance.

Web applications running code written in a dynamic programming language, such as JavaScript, Python, Ruby, etc., are generally known to run slower than native applications. Currently, a performance race between the different user agent vendors is ongoing, hoping to increase the JavaScript performance up to achieving speeds that are at most a factor 2 slower than native applications, or in other cases equally fast as native applications.

However, existing approaches are dependent on the target machine and are vendor-specific.

It is well-known that a lot of effort is spent in the performance of such dynamic programming languages as JavaScript.

For a first prior art example, Google's PNaCl (Portable Native Client) accepts portable native code, more specifically optimized LLVM IR (LLVM Intermediate Representation), to run applications at near native speed. LLVM (historically 'Low-level Virtual Machine) IR is a bitcode that can be generated from static programming languages like Java, Fortran, and C/C++. This process is referred to as front-end code generation. From LLVM IR, native code can be generated for most Instruction Set Architectures (ISA) and micro architectures. This process is referred to as back-end code generation. The LLVM IR can also be further optimized to another version LLVM IR. This process is often referred to as middle-end code generation, but can also be thought of as part of the frond-end code generation.

Google's PNaCl's workflow is illustrated in figure 2. A developer 212 produces a code resource 215 in a static programming language (*i.e.,* a language that couples explicit type declarations to variables such that type correctness can be checked and enforced at compile time, such as Java, Fortran, or C). The developer 212 must possess a front-end compiler 213 to compile 214 the code resource 215 to a PNaCl resource 216. The developer 212 deposits the PNaCl resource 216 on an origin server 200, from where it is sent 217 to a NaCl sandbox 210 operating on an end user device 203 on which the user agent 202 runs. The PNaCl resource 216 is delivered to the NaCl sandbox 210, which compiles 218 it with a back-end compiler 211 to native machine code for execution on the end user device 203.

For a second prior art example, Apple has incorporated the LLVM IR directly into the Nitro engine, enabling Webkit-based user agents to run JavaScript programs faster.

The interpretation or compilation of JavaScript files by Webkit-based browsers is done in 4 stages, called tiers, and depends on the frequency of use. Very frequently used Web resources need to run the fastest and are ultimately compiled with the most performing Fourth Tier LLVM (FTL) compiler.

These improvement provide a significant performance improvement for Web applications but also have their drawbacks:

The PNaCl solution makes use of Google's NaCl (Native Client) solution to run the native code (derived from the LLVM IR) in a sandbox. The PNaCl solution is a proprietary solution and involves the installation of Google's NaCl on the end user device. The solution can therefore not be generally used for Web applications. Moreover, the PNaCl solution is targeted to derive LLVM IR from static programming languages like Java, C/C++ and Fortran using *e.g.* the llvm-gcc or clang compilers. It follows that the user agent has no control over the process of delivering and executing the code resource. Also, the end user must install Google's proprietary NaCl sandbox on the end user device, for providing proprietary back-end compilation. Moreover, the developer of the code resource must provide a front-end compiled PNaCl resource to content servers, and must use a static programming language. By consequence, there are many limitations that must be met, and, for instance, debugging is more complicated.

The Webkit-based user agents require computing resources and device power from the end user device on which the user agent is running for the 2^{nd}, 3^{rd}, and 4^{th} tier compilations and for the 1^{st} tier interpretation. For devices with limited power resources, like smartphones or smartwatches, this may pose a problem, since it may deplete the battery faster. The staged compilation also requires a certain amount of time and additional power before the most optimal compilation is reached. The staged compilation tries to avoid unnecessary time-consuming compilation for JavaScript resources that are not used frequently. However, for resources that are frequently used, the staged compilation slows down the application and requires more computing power. The compilation is done to speed up the total execution time, by providing a more optimized version of functions that are used frequently. However, initially, the compilation will slow down the execution just because of that compilation step.

Embodiments of the present invention aim to do away with these drawbacks, *inter alia* by delivering precompiled code resources directly to the user agent.

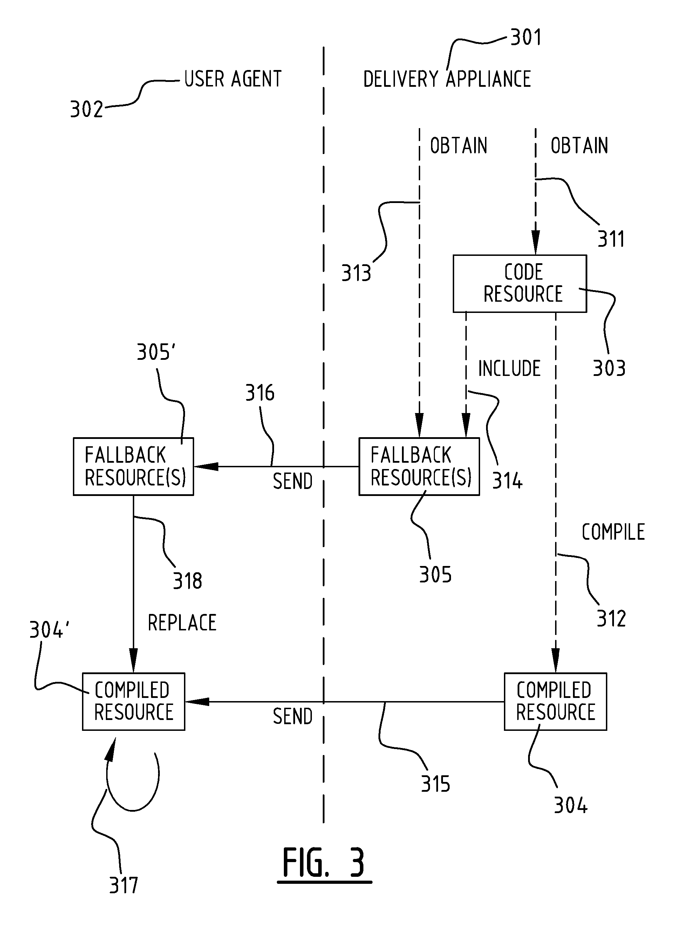

An embodiment of a method according to the present invention will now be described with reference to figure 3. The figure shows a delivery appliance 301 and a user agent 302.

The user agent 302 requests delivery of a code resource 303 for executing the program of the code resource 303. The code resource 303 may be written in a high-level dynamic programming language, such as JavaScript or Python. The code resource 303 is available at the delivery appliance 301. The code resource 303 may optionally have been obtained 311 from elsewhere, for instance from an origin server (not shown). The delivery appliance 301 compiles 312 the code resource 303 to, eventually, a compiled resource 304 using optimization, and includes one or more type checks in the compiled resource 304. The delivery appliance 301 sends 315 the compiled resource 304 to the user agent 302 (the received compiled resource is shown with reference number 304'). Compilation 312 may be done with a front-end compiler, such as Webkit, JXCode, Pyston, Rubinius, Terra or llvm-gcc. The compiled resource 304 may be an LLVM IR (LLVM Intermediate Representation), which can be executed 317 by the user agent 302 (via interpretation or (further) compilation to native machine code or a hybrid combination of both). Alternatively, the compiled resource 304 may be a CIL (Common Intermediate Language) portable executable.

The delivery appliance 301 also obtains 313 or produces one or more fallback resources 305. Example fallback resources 313 include a dynamically typed resource compiled from the original code resource 303 using optimization (in a single compilation step or via multiple compilation steps, or as a by-product from the compilation 312 of said compiled resource 304), include a bytecode resource produced from said original code resource 303, and/or include 314 said original code resource 303. The one or more fallback resources 305 are sent 316 to the user agent 302 (the received fallback resource(s) is/are shown with reference number 305').

The user agent 302 executes 317 (*e.g.,* executes via interpretation or via (back-end) compilation to and execution of native machine code, depending on the user agent's 302 end user device instruction set architecture) the compiled resource 304'. If, when executing 317 the compiled resource 304', it is found that a type mismatch due to said optimization has occurred (*i.e.,* an optimization has been made that involves a static type assumption that is found to be invalid), the compiled resource 304' is replaced 318 at least partially by said one or more of said fallback resources 305'. This is made possible since the fallback resource(s) 305' that was received by the user agent 302 is/are formed in such a way that it/they can be used to replace 318 the compiled resource 304'.

When the dynamic programming language code resource 303 (*e.g.,* a JavaScript source code resource) was derived from a static programming language (using, *e.g.*, asm.js), type mismatches should normally never occur. In theory, the insertion of the type checks can therefore be avoided. In practice, this may pose security issues, in case the compiled resource 304 (*e.g.,* an LLVM IR resource) was tampered with, and therefore in practice there may be type check insertion for this situation too.

The replacement 318 can comprise an on-stack-replacement exit from the compiled resource 304' to one of the fallback resource(s) 305', or it can comprise compiling a replacement compiled resource (not shown) to replace the compiled resource 304'. Alternatively, the invalidated native object code can be replaced 318 using such techniques as Just-In-Time (JIT) linking (late linking), which postpones the linking step until executable code is needed. Alternatively, the linking can be completed in idle time, although this may consume more power than is actually necessary, since portions of the program that are not used by the end user do not necessarily require linking.

The fallback resource 305 can represent the entire program of the code resource 303, or only the minimal subset of the program of the code resource 303 that is required to solve type mismatch issues, or a part of the program in between those two extremes.

The delivery appliance 301 can also optionally generate a code map (not shown) that represents a mapping relationship between the compiled resource 304 and one or more of the fallback resources 305, in order to make replacement 318 more easily targeted at the portion of the compiled resource 304' that contained an invalidated optimization. If the original code resource 303 is sent 316 to the user agent 302 as (one of) the fallback resource(s) 305 and if the code map maps between the original code resource 303 and the compiled resource 304, debugging is especially facilitated at the user agent 302, since the user agent 302 has access to a higher-level version of the program (*viz*., the code resource 303, *e.g.,* in human-readable source code format) as well as to a mapping relationship between the executed version 304' of the program and that original code resource 303.

The compilation 312 may take into account user agent properties of the user agent 302, such as the user agent vendor or manufacturer, the user agent type, the user agent version, and/or specific user agent features. User agent properties may be taken into account as a whole, *e.g.,* for a given version of a given user agent type, such as "Firefox 32.0.3", or as a specific collection of user agent features, *e.g.,* by detecting support for specific features. By taking into account user agent properties, the delivery appliance 301 can improve the performance of the compiled resource 304 when run 317 by the user agent 302.

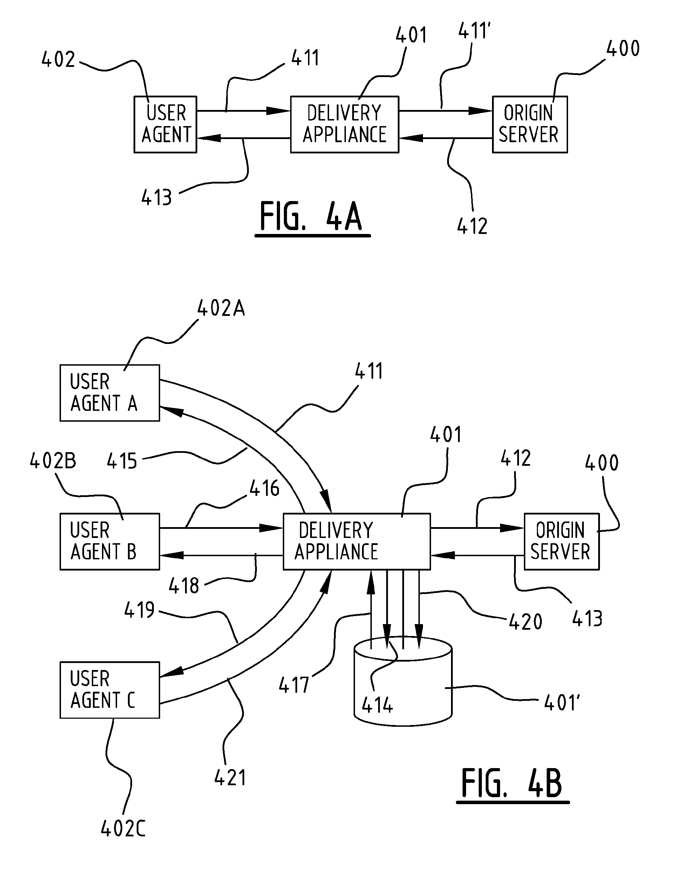

Figure 4A illustrates an embodiment of a system and a method according to the invention. The system comprises user agent 402, delivery appliance 401, and origin server 400. The user agent 402 and the delivery appliance 401 function analogously to the respective user agent 302 and delivery appliance 301 embodiments described with reference to figure 3. The origin server 400 is configured to store a code resource 303 (not shown in figure 4), and to send that code resource 303 to the delivery appliance 401.
The user agent 402 requests 411 delivery of code resource 303 stored at the origin server 400. The delivery appliance 401 receives the request 411, and relays 411' the request to the origin server 400. The origin server 400 receives the (relayed) request, and responds 412 by sending the code resource 303 to the user agent 402, via the delivery appliance 401. Thus, the delivery appliance 401 obtains the code resource 303. Then, the delivery appliance 401 compiles 304 the code resource 303 in a manner analogous to the manner described with reference to figure 3, using compilation and including one or more type checks, such that a compiled resource 304 and at least one fallback resource 305 are available at the delivery appliance 401. Next, the delivery appliance 401 sends 413 both the compiled resource 304 and the at least one fallback resource 305 to the user agent 402, where the program can be further executed 317, for instance by interpreting the compiled resource 304 or by compiling the compiled resource 304 to native object code which can be linked and executed at the end-user device on which the user agent 402 runs.

In another embodiment, the origin server 400 takes on at least a part of the functionality of the delivery appliance 401. In other words, the step of sending to the user agent 402 the at least one fallback resource 305, or more in particular, the original code resource 303, is performed by the origin server 400 instead of by the delivery appliance 401. Additionally, the origin server 400 may optionally even perform the steps of compiling the compiled resource 304 and including the type checks, and sending the compiled resource 304. Depending on the layout of the network through which the components of the system are connected, that or those transmission(s) may or may not pass through the delivery appliance 401.

It is noted that request 411 to the origin server 400 need not necessarily pass via delivery appliance 401, but may also be sent from user agent 402 to origin server 400 via another path of the network not comprising the delivery appliance 401. It is sufficient for the delivery appliance 401 to intercept (or, more generally, to become involved in) the response 412 from the origin server 400 with the code resource 303 to perform the embodiment of the method and to send 413 the respective resources to the user agent 402 of its own accord.

Alternative, the delivery appliance 401 takes on at least a part of the functionality of the origin server 400, by pre-storing on the delivery appliance 401 the original code resource 303, such that the need for the origin server 400 as a separate apparatus is obviated.

It is noted that the user agent 402 may hint to the delivery appliance 401 (or the origin server 400) that it is capable of working with pre-compiled resources, *e.g.* in request 411 using a new header field or an existing header field such as 'Accept: text/plain' or 'Accept-Encoding: compiled', or the like.
Likewise, the way that the code resource 303 is accessed may be used to hint that the delivery appliance 401 (or the origin server 400) is capable of working with pre-compiled resources.

It is also noted that the compiled resource 304 may be sent to the user agent 402 included in the at least one fallback resource 305. In a particular example, LLVM IR code of the compiled resource 304 is included in the JavaScript source code included as a fallback resource 305. A web application can use interleaved formats, concatenation of web resources, multipart responses, streamable package file (SPF) formats, or equivalents. Alternatively, a new Internet media type may be assigned for the compiled resource 304, preferably in particular for LLVM IR Web resources. In particular, the compiled resource 304 can be sent as a separate web resource, *i.e.* not included in the at least one fallback resource 305, over an existing HTTP connection between the user agent 402 and the delivery appliance 401. Alternatively, web resources can be communicated via pre-fetch, push, XMLHttpRequest (XHR), or equivalents. Another alternative way to send the compiled resource 305 to the user agent 402 may be to send it, as a separate message, via another communication mechanism, such as a full-duplex communication channel, like WebSockets, Raw Sockets, WebRTC (Web Real-Time Communication), or equivalents.

It is further also noted that optionally the Web application author (*i.e.,* the code resource creator or developer) may produce an additional program (such as a JavaScript resource) configured to retrieve pre-compiled resources, such as LLVM IR resources, that had been stored somewhere previously. Also, the user agent 402 may provide an API (Application Programming Interface) to allow locating or hand-over of compiled resources, such as pre-compiled JavaScript resources. Also, the user agent 402 may provide hooks into its compilation process (*i.e.,* into its execution environment) allowing Service Workers to provide compiled resources, such as pre-compiled JavaScript resources. Further, the user agent's compiler may pre-emptively begin to compile the at least one fallback resource, such as a JavaScript source code resource, if the compiled resource is not available on time, in order to reduce execution delay of the program at the user agent 402. In that case, the user agent's compiler may halt compilation when the compiled resource that has been compiled at the delivery appliance 401 is received by the user agent 402, in order to save power resources.
Also, a delivery appliance 401 may inject an additional higher-level resource for such Web applications that did not include support for lower-level Web resources, such as LLVM IR. When the user agent does not support LLVM IR, and the Web application author did not provide the additional program, the delivery appliance may insert the additional program (*e.g.,* a JavaScript resource) in the Web application. A link to this additional program can *e.g.* be inserted by the delivery appliance in the HTML <HEAD> of the reply to the original Web application request from the user agent. The additional program would then retrieve the precompiled version and perform said hand-over to the user agent.

Figure 4B illustrates another embodiment of a system and a method according to the invention. The system comprises user agent A 402A, user agent B 402B, user agent C 402C, delivery appliance 401 and origin server 400. The delivery appliance 401 comprises a cache memory storage 401', which may be included within the delivery appliance 401, or which may be otherwise accessible for storing (and loading) cached resources from the delivery appliance 401. The user agents A-C 402A-C and the delivery appliance 401 function analogously to the respective user agent 302 and delivery appliance 301 embodiments described with reference to figure 3. As with figure 4A, the origin server 400 is configured to store a code resource 303 (not shown in figure 4), and to send that code resource 303 to the delivery appliance 401.
User agent A 402A requests 411 delivery of the code resource 303 from the origin server 400. The delivery appliance 401 relays 412 the request 411 to the origin server 400. The origin server 400 responds 413 by sending the requested code resource 303 to the user agent 402A via the delivery appliance 401. The delivery appliance 401 compiles the received code resource 303 to a compiled resource 304, taking into account user agent properties of user agent A 402A, such that the compiled resource 304 is compatible with user agent A 402A. The delivery appliance 401 then sends 415 both the compiled resource 304 and at least one fallback resource 305, such as the original code resource 303 and/or a less-optimized compiled version (*e.g.,* a bytecode resource compiled/interpreted from said original code resource 303, or a different, dynamically typed instead of statically typed compiled resource compiled from said original code resource using optimization that assumes at least a degree of dynamic typing), to the user agent 402A, for further execution. The delivery appliance also stores 414 the compiled resource 304 that it has compiled for user agent A 402A as well as at said least one fallback resource 305 as cached resources, for example in the cache memory storage 401', in order to be able to provide these resources more efficiently for future requests from user agents like user agent A 402A.
User agent B 402B requests 416 the same code resource 303. User agent B 402B is (sufficiently) compatible with user agent A 402A, such that resources compiled for user agent A 402A may also serve for user agent B 402B. Since the delivery appliance 401 already has a compiled resource 304 available as a cached resource that is compatible with user agent B 402B, it may load 417 this from the cache memory storage 401', as well as other cached resources, such as the at least one fallback resource 305 which is also (sufficiently) compatible with user agent B 402B, and send 418 these cached resources to user agent B 402B, for further execution.
User agent C 402C requests 419 the same code resource 303. User agent C 402C is incompatible (or insufficiently compatible) with user agent A 402B, such that certain resources that have been compiled for user agent A 402A may not serve for user agent C 402C. Consider the case that the compiled resource 304 that had been compiled for user agent A 402A is still compatible with user agent C 402C (for instance, because a target-independent subset of LLVM IR has been used as the compilation target), but that one of the fallback resources is a dynamically typed resource, for example DFG JIT, and is not compatible with user agent C 402C. By consequence, the delivery appliance 401 must obtain or produce another fallback resource that does take into account user agent properties of user agent C 402C. The delivery appliance 401 can load a resource(s) from the cache memory storage 401' and use that directly or after suitable processing to meet the UA properties. The delivery appliance 401 then sends 421 compatible resources to the user agent C 402C (which may or may not be the same resources that were sent to user agent A 402A and/or user agent B 402B), for further execution. In order to be able to respond to future requests from user agents like user agent C 402C more efficiently, the delivery appliance 401 may also store 420 the new resources that take into account user agent properties of user agent C 402C.

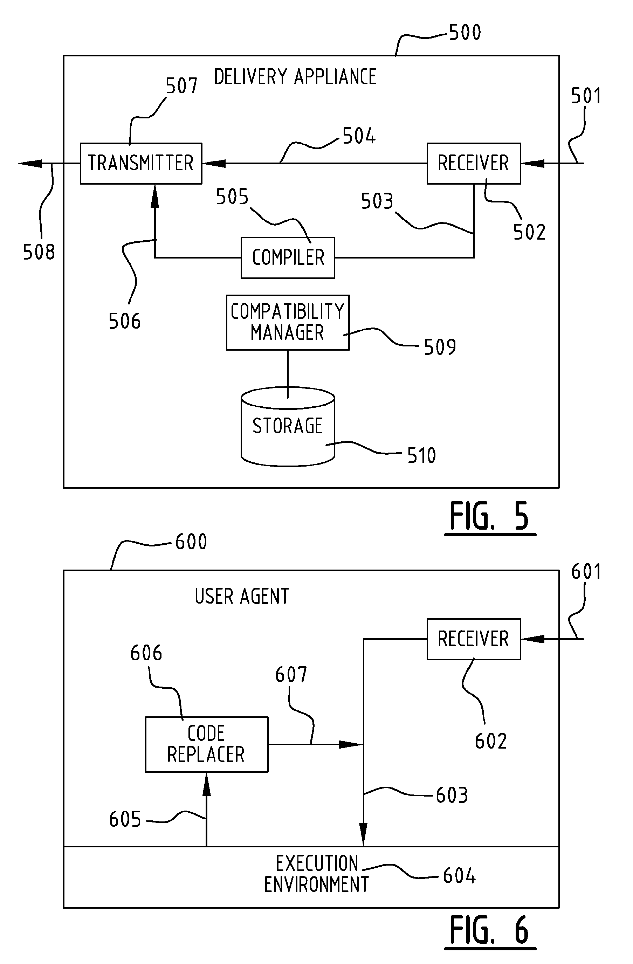

Figure 5 illustrates an embodiment of a delivery appliance 500 according to the invention. The delivery appliance 500 comprises a compiler 505 and a transmitter 507. The delivery appliance 500 also comprises an optional receiver 502, an optional compatibility manager 509 and an optional cache storage 510. The receiver 502 is configured to receive 501, for instance from an origin server (not shown) a requested code resource; alternatively, the requested code resource may have been pre-stored at the delivery appliance, for example in storage 510. The code resource request may also have been received by the receiver 502. The code resource is provided to 503 and compiled by the compiler 505 to a compiled resource using optimization and type checks are included by the compiler 505 (or by another entity) in the compiled resource, which is made available 506 to the transmitter 507. The code resource may also be made available directly 504 to the transmitter 507. Additionally, one or more fallback resources are obtained or otherwise produced at the delivery appliance. The fallback resources are adapted to replace, at the user agent, using OSR, JIT, etc., (at least a part of) the compiled resource that was compiled by the compiler 505, when a type mismatch due to said optimization is detected during execution (at a user agent, which is not shown) of the compiled resource.
The transmitter 507 sends 508, to the user agent, the compiled resource and the one or more fallback resources, and optionally a code map representing a mapping relationship between those. The storage 510 is configured to store cached resources such as the code resource and the one or more fallback resources, and optionally the code map.
In case the resources or some of the resources are produced taking into account user agent properties of a respective user agent, there can be provided a compatibility manager 509. When a request is received from a new user agent for delivering the code resource, the compatibility manager 509 is configured to determine which of the cached resources are compatible with the new user agent (for instance by comparing the user agent properties of the new user agent with expected user agent properties of one or more of the cached resources; an indication of the user agent properties of the new user agent may have been provided, for example, in the new user agent's original code resource request). The compatibility manager 509 then sends the compatible resources to the new user agent and obtains a compatible version of the respective incompatible resources and sends those compatible versions to the new user agent.

Figure 6 illustrates an embodiment of a user agent 600 according to the invention. The user agent comprises a receiver 602. The user agent 600 also comprises an optional code replacer 606. The user agent 600 also has access to an execution environment 604, which may be comprised within the user agent 600 (for example for interpretation to a virtual machine) or which execution environment 604 may be present on the end user device (not shown) on which the user agent 600 is running or on another computing device (not shown), for instance via back-end compilation to native machine code, linking and direct execution.
The user agent 600 may also comprise a transmitter (not shown) for transmitting an original request for a code resource.
The user agent 600 receives 601 from a delivery appliance (not shown) a compiled resource compiled from said code resource using optimization, and one or more fallback resources that are adapted to replace (at least partially) said compiled resource when a type-mismatch due to said optimization is detected during execution of said compiled resource by said execution environment 604.

The receiver 602 may make available 603 the compiled resource for execution to the execution environment 604. If during execution a type-mismatch due to said optimization is detected by said execution environment 604, the code replacer 606 is notified 605 thereof. The code replacer 606 is configured to replace 607 at least a part of the compiled resource with one or more of the at least one fallback resource. Additionally or alternatively, the code replacer 606 may replace 607 the compiled resource in another manner, for instance by compiling a new replacement compiled resource using a compiler (not shown).

In some embodiments, the user agent 600 comprises a cache (not shown) configured for caching the at least one fallback resource, and optionally the compiled resource.

A person of skill in the art would readily recognize that steps of various above-described methods can be performed by programmed computers. Herein, some embodiments are also intended to cover program storage devices, *e.g.* digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for delivering a code resource of a dynamic programming language to a user agent, comprising the following steps at a delivery appliance remote from said user agent:
- compiling said code resource to a compiled resource using optimization;
- including at least one type check in said compiled resource;
- sending to said user agent said compiled resource; and
- sending to said user agent at least one fallback resource for said compiled resource;
wherein said at least one fallback resource is adapted for replacing at least partially said compiled resource when a type mismatch due to said optimization is detected during execution of said compiled resource.

2. The method of claim 1,
wherein said at least one fallback resource comprises at least one of:
- said code resource;
- a bytecode resource produced from said code resource; and
- a dynamically typed resource compiled from said code resource using optimization; and/or
wherein said compiled resource is a statically typed intermediate representation, preferably LLVM Intermediate Representation.

3. The method of any one of the previous claims, comprising the following step at said delivery appliance:
- sending from said delivery appliance to said user agent a code map representing a mapping relationship between said compiled resource and said at least one fallback resource.

4. The method of any one of the previous claims,
wherein at least one of said resources is produced taking into account user agent properties of a respective user agent;
said method comprising the following steps at said delivery appliance:
- storing said compiled resource and said at least one fallback resource as cached resources;
- upon receiving a request from a new user agent for delivering said code resource, determining which of said cached resources are compatible with said new user agent; and
- for each cached resource that is determined to be compatible, sending said respective compatible cached resource to said new user agent; and
- for each cached resource that is determined to be incompatible, obtaining a compatible version of said respective incompatible resource and sending said compatible version to said new user agent.

5. The method of any one of the previous claims, wherein said delivery appliance is situated at a network node between said user agent and said origin server, said method comprising:
- obtaining said code resource from an origin server storing said code resource.

6. The method of any one of the claims 1-4, comprising pre-storing said code resource on said delivery appliance.

7. A method for obtaining a code resource of a dynamic programming language at a user agent, comprising the following steps at said user agent:
- receiving from a delivery appliance remote from said user agent a compiled resource compiled from said code resource using optimization; and
- receiving from said delivery appliance at least one fallback resource for said compiled resource; wherein said at least one fallback resource is adapted for replacing at least partially said compiled resource when a type mismatch due to said optimization is detected during execution of said compiled resource.

8. The method of claim 7, comprising the following steps at said user agent:
- executing said compiled resource;
- detecting whether a type mismatch due to said optimization occurs when executing said compiled resource; and when a type mismatch is detected:
- replacing at least partially said compiled resource with said at least one fallback resource.

9. The method of any one of the claims 7-8, wherein said at least one fallback resource comprises at least one of:
- said code resource;
- a bytecode resource produced from said code resource; and
- a dynamically typed resource compiled from said code resource using optimization; and/or wherein said compiled resource is a statically typed intermediate representation, preferably LLVM Intermediate Representation.

10. The method of any one of the claims 7-9, comprising the following steps at said user agent:
- receiving from said delivery appliance a code map representing a mapping relationship between said compiled resource and said at least one fallback resource; and
- taking into account said code map for said replacing.

11. The method of any one of the claims 7-10, wherein said replacing comprises:
- replacing by performing an on-stack-replacement exit from said compiled resource being executed to one of said at least one fallback resource; or
- replacing by compiling from said at least one fallback resource a replacement compiled resource adapted for replacing at least partially said compiled resource.

12. The method of any one of the claims 7-11, comprising at said user agent:
- providing to said delivery appliance user agent properties of said user agent; and
- receiving resources from said delivery appliance that are compatible with said user agent.

13. A delivery appliance for delivering a code resource of a dynamic programming language to a user agent remote from said delivery appliance, said delivery appliance comprising:
- a compiler configured for:
- compiling said code resource to a compiled resource using optimization; and
- including at least one type check in said compiled resource; and
- a transmitter configured for:
- sending to said user agent said compiled resource; and
- sending to said user agent at least one fallback resource for said compiled resource;
wherein said at least one fallback resource is adapted for replacing at least partially said compiled resource when a type mismatch due to said optimization is detected during execution of said compiled resource.

14. A user agent for obtaining a code resource of a dynamic programming language, comprising:
- a receiver configured for:
- receiving from a delivery appliance remote from said user agent a compiled resource compiled from said code resource using optimization; and
- receiving from said delivery appliance at least one fallback resource for said compiled resource;
wherein said at least one fallback resource is adapted for replacing at least partially said compiled resource when a type mismatch due to said optimization is detected.

15. A computer program product comprising computer-executable instructions for performing a method when the program is run on a computer, the method comprising the steps of any one of the methods of any one of the claims 1-12.
